(19) Europäisches Patentamt / European Patent Office / Office européen des brevets

(11) **EP 2 643 141 B1**

(12) **EUROPEAN PATENT SPECIFICATION**

(45) Date of publication and mention of the grant of the patent:
**15.03.2017 Bulletin 2017/11**

(51) Int Cl.:
**B65D 1/12** *(2006.01)* **B29C 49/00** *(2006.01)*
**C08F 210/16** *(2006.01)* **C08F 2/00** *(2006.01)*
**C08L 23/06** *(2006.01)* **C08L 23/08** *(2006.01)*

(21) Application number: **11784686.5**

(22) Date of filing: **21.11.2011**

(86) International application number:
**PCT/EP2011/070530**

(87) International publication number:
**WO 2012/069400 (31.05.2012 Gazette 2012/22)**

(54) **Blow molded article comprising trimodal polyethylene**

Blasgeformter Gegenstand enthaltend trimodales Polyethylen

Article extrudé-soufflé comprenant un polyéthylène trimodal

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2010 EP 10014835**

(43) Date of publication of application:
**02.10.2013 Bulletin 2013/40**

(73) Proprietor: **Basell Polyolefine GmbH**
**50389 Wesseling (DE)**

(72) Inventors:
• **BERTHOLD, Joachim**
  **83224 Grassau (DE)**
• **MARCZINKE, Bernd Lothar**
  **67354 Römerberg (DE)**
• **DOETSCH, Diana**
  **55116 Mainz (DE)**
• **SATTEL, Rainer**
  **67165 Waldsee (DE)**
• **VITTORIAS, Iakovos**
  **55129 Mainz (DE)**
• **BISSON, Peter**
  **67071 Ludwigshafen (DE)**

(74) Representative: **Gaverini, Gaetano Luigi Attilio et al**
**Basell Poliolefine Italia S.r.l.**
**Intellectual Property**
**P.le Donegani, 12**
**44122 Ferrara (IT)**

(56) References cited:
**WO-A1-01/23446** **WO-A1-2011/060954**
**WO-A2-2010/139419**

EP 2 643 141 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to blow molded articles made of or comprising a trimodal polyethylene having improved dimensional stability after moulding.

For blow moulding applications, PE resins are required in general to combine good processability, high surface quality of the finished article and a good balance of mechanical properties (stiffness, impact resistance, environmental stress crack resistance). Already this is difficult to realize simultaneously for Ziegler products.

Special applications require the polyethylene to fullfill additional properties.

Trimodal polyethylene for use in blow moulding of cans and containers of up to 150 L, obtained by Ziegler catalysis, is known e.g. from EP-1228101. Use of a Ziegler catalyst ensures good processing properties of the ensuing polymer, and allows of obtaining good mechanical properties, in particular a good ESCR. Especially in industry, barrels made from polyethylene materials are often used for packaging chemicals or other hazardous substance, such PE materials excelling by superior stiffness and stress crack resistance of the ensuing blow mouldings. When used for drums, a simple but nonetheless aspect gains weight, dimensional stability or conformity of the moulded article with the mould. This for the simple reason, that closure of a drum by a lid is not safe if the moulded article tends not to conform with the dimensions of the mould after release therefrom and cooling down. Such dimensional deviation, otherwise coined warpage, is routinely observed, but needs to be minimized. Polyethylene obtained from Phillips-type Chromium oxide catalysts is known to display very little warpage, but suffers from very broad molecular weight distribution unsuitable for multimodal product engineering.

It is an object of the present inventon to devise blow molded articles made of or comprising a high density polyethylene obtained by a non-Phillips catalyst, conferring improved dimensional stability to the moulded article after release from the mould and cooling to ambient temperature.

This object is solved by a blow molded article selected from a canister, jerry can, cask, tank, drum or barrel, made from or comprising a trimodal polyethylene having a density of from 0.950 to 0.958 $g/cm^3$, preferably of from 0.952 to 0.956 $g/cm^3$, produced by polymerisation with a Ziegler catalyst, wherein the canister and jerry can are of 15 to 60 L volume and are made from or comprise the said trimodal polyethylene with a melt index (HLMI) according to ASTM D-1238, at 190°C and 21.6 kg, in the range of from 4 to 7 g/10 min and a dimensionless Hostalene Index (HLCBI) value of from 7 to 10, and the cask, tank, drum and barrel are of 90 to 150 L volume and are made from or comprise the said trimodal polyethylene with a melt index HLMI in the range of from 2.5 to 5.5 g/10 min and a HLCBI value of from 9.5 to 14.5.

The dimensionless Hostalen Index, HI or HLCBI (from *Hostalen Long Chain Branching Index*) for short, of the present invention is calculated according to the following equation:

$$HLCBI = \left(\frac{M_z}{M_w}\right)\left(\frac{1}{g_{M_z}}\right)\left(eh_{at\,0.1s^{-1}} - 0.99\right)$$

where:

$M_z$ and $M_w$ are the 3rd and 2nd (or weight-average) moment of the molecular weight distribution, as determined by Gel-Permeation Chromatography coupled with Multi-Angle-Laser-Light-Scattering (GPC-MALLS). A more detailed description of the method can be found in the experimental section. For data recording and computation of the Mz and Mw values from the experimentally obtained distribution curve, commercial GPC software was used (from: hs GmbH, Hauptstraße 36, D-55437 Ober-Hilbersheim).

$g_{Mz}$ is the branching factor at a molecular weight $M = M_z$. The branching factor is defined for each eluted polymer fraction, as the ratio of the root-mean-square radius of gyration, $\left\langle R_g^2 \right\rangle$, of the measured polymer to the rms radius of gyration of a linear PE reference, $\left\langle R_g^2 \right\rangle_{linear}$, that is

$$g_M = \frac{\left\langle R_g^2 \right\rangle_M}{\left\langle R_g^2 \right\rangle_{M,linear}}$$

eh is the elongational hardening of the polymer, for the purposes of the present patent at an uniaxial elongation rate of 0.1 s$^{-1}$ (eh indexed 'at 0.1 s$^{-1}$') and at a test temperature of T = 150 °C. Elongational or strain hardening in uniaxial elongation is the ratio of the maximum melt elongational viscosity measured at the specific elongation rate, $\eta_{E,max}$, over the linear response at the same time, $\eta_s$. Accordingly, eh is defined as

$$eh = \frac{\eta_{E,\max}}{\eta_s}$$

The $\eta_{E,max}$, in case no plateau is observed after a certain elongation, can be defined as the maximum polymer melt viscosity value, measured at 10-50 seconds after the start of deformation or at elongations L of the specimen $\ln(L(t)/L(0)) \geq 3$ (based on the definition of 'Hencky strain').

The linear viscoelastic response, $\eta_s$, is calculated from fitting linear rheological data of G' and G'' at the same temperature with a multi-mode Maxwell model, calculating the transient shear viscosity and multiplying by 3 (Trouton ratio). - The present method and the definition of elongational (strain) hardening is described in Mackosko C.W. Rheology Principles, Measurements and Applications, 1994, Wiley-VCH, New York.

Elongational flow or rheology properties of polymer melts are paramount to processing operations like film blowing, blow moulding and thermoforming. Strain or elongational hardening eh induces a so-called self-healing effect which supports a homogenous deformation of the melt. Thus polymers exhibiting strain hardening in elongational flow improve the production of films and bottles or other mouldings with respect to a homogenous distribution of wall thickness. On the other hand, strain or elongational hardening eh is also responsive to molecular properties of the polyethylene composition otherwise poorly measurable by parameters reflecting the weight of the high molecular weight fraction, such as $M_z$, or the degree of long chain branching such as reflected by the branching factor for the high molecular weight tail weight $M_Z$. Conventionally, the skilled person was held to believe that eh is positively correlated to and is dominated by $M_z$ and eventually $g_{Mz}$.

Preferably, the polyethylene composition has a $g_{Mz} > 0.26$, more preferably > 0.28, most preferably >0.31 . Preferably, in combination with the foregoing prefered embodiments for $g_{Mz}$, $g_{Mz}$ has a value of less or up to 0.45, more preferably has a value of less or up to 0.40, and preferably, in combination with the foregoing preferred embodiments, always the elongation hardening value eh > 1. 2 s$^{-1}$, more preferably the eh value is at least 1.2 s$^{-1}$, more preferably is at least 1.4 s$^{-1}$, or is above.

More preferably, the polyethylene composition has a $M_z$ <3'700'000 g/mol, more preferably of of <3'200'000 g/mol. The latter most preferred embodiment is particularly preferred in conjunction with the above given, preferred values for $g_{Mz}$, in particular with $g_{Mz}$>0.31, and is preferred especially and preferably in conjunction with an eh value of >1.4 s$^{-1}$. This illustrates further that a decrease in $M_z$ and a lower degree in long chain branching may surprisingly coincide with an increase in elongational viscosity and hence processing.

It is further preferred to obtain such product by using a Ziegler solid catalyst component comprising the product of a process comprising (a) reacting a magnesium alcoholate of formula $Mg(OR_1)(OR_2)$ compound, in which $R_1$ and $R_2$ are identical or different and are each an alkyl radical having 1 to 10 carbon atoms, with titanium tetrachloride carried out in a hydrocarbon at a temperature of 50-100°C, (b) subjecting the reaction mixture obtained in (a) to a heat treatment at a temperature of 110°C to 200°C for a time ranging from 3 to 25 hours (c) isolating and washing with a hydrocarbon the solid obtained in (b), said solid catalyst component having a Cl/Ti molar ratio higher than 2.5

In the preparation of the catalyst component (A), $R_1$ and $R_2$ are preferably alkyl groups having from 2 to 10 carbon atoms or a radical -$(CH_2)_nOR_3$, where $R_3$ is a $C_1$-$C_4$-alkyl radical and n is an integer from 2 to 6. Preferably $R_1$ and $R_2$ are $C_1$-$C_2$-alkyl radical. Examples of such magnesium alkoxides are: magnesium dimethoxide, magnesium diethoxide, magnesium di-i-propoxide, magnesium di-n-propoxide, magnesium di-n-butoxide, magnesium methoxide ethoxide, magnesium ethoxide n-propoxide, magnesium di(2-methyl-1 -pentoxide), magnesium di(2-methyl-l -hexoxide), magnesium di(2-methyl-1 -heptoxide), magnesium di(2-ethyl-1 -pentoxide), magnesium di(2-ethyl-1 - hexoxide), magnesium di(2-ethyl-1 -heptoxide), magnesium di(2-propyl-1 -heptoxide), magnesium di(2-methoxy-1 -ethoxide), magnesium di(3-methoxy-1 -propoxide), magnesium di(4-methoxy-1-butoxide), magnesium di(6-methoxy-1 -hexoxide), magnesium di(2-ethoxy-1 -ethoxide), magnesium di(3-ethoxy-1 -propoxide), magnesium di(4-ethoxy-1-butoxide), magnesium di(6-ethoxy-1 -hexoxide), magnesium dipentoxide, magnesium dihexoxide. Preference is given to using the simple magnesium alkoxides such as magnesium diethoxide, magnesium di-n-propoxide and magnesium di-isobutoxide. Magnesium diethoxide is especially preferred.

The magnesium alkoxide can be used as a suspension or as a gel dispersion in a hydrocarbon medium. Use of the magnesium alkoxide as a gel dispersion constitutes a preferred embodiment. In general, commercially available magnesium alkoxides, in particular $Mg(OC_2H_5)_2$, has average particle diameter ranging from 200 to 1200 $\mu$m preferably about 500 to 700 $\mu$m. In order to have optimal results in the catalyst preparation it is preferable to substantially reduce its particle size. In order to do so, the magnesium alcoholate is suspended in an inert, saturated hydrocarbon thereby creating a hydrocarbon suspension. The suspension can be subject to high shear stress conditions by means of a high-speed disperser (for example Ultra-Turrax or Dispax, IKA-Maschinenbau Janke & Kunkel GmbH) working under inert atmosphere(Ar or N2). Preferably the shear stress is applied until a gel-like dispersion is obtained. This dispersion differs from a standard suspension in that it is substantially more viscous than the suspension and is gel-like. Compared with the suspended magnesium alcoholate, the dispersed magnesium alcoholate gel settles down much more slowly and to a far lesser extent.

As already explained, in the first step, the magnesium alkoxide is reacted with $TiCl_4$ in an inert medium.

The reaction of the magnesium alkoxide with $TiCl_4$ is carried out at a molar ratio of Ti/Mg higher than 1 and preferrably in the range 1.5 to 4, and more preferably in the range of 1.75 to 2.75, at a temperature from 50 to 100°C, preferably from 60 to 90°C. The reaction time in the first stage is 0.5 to 8 hours, preferably 2 to 6 hours.

Suitable inert suspension media for the abovementioned reactions include aliphatic and cycloaliphatic hydrocarbons such as butane, pentane, hexane, heptane, cyclohexane, isooctane and also aromatic hydrocarbons such as benzene and xylene. Petroleum spirit and hydrogenated diesel oil fractions which have carefully been freed of oxygen, sulfur compounds and moisture can also be used.

In a successive step (b) the so obtained reaction mixture containing the product of the reaction between the magnesium alcoholate and the transition metal compound is subject to a thermal treatment at a temperature ranging from 80°C to 160°C, preferably from 100°C to 140°C, for a period of time ranging from 3 to 25 hours, preferably from 5 to 15 hours before split-off process of alkyl chloride is complete. At the end of the preparation process particle size of the catalyst component (A) preferably ranges from 5 to 30μm and more preferably from 7 to 15μm.

After step (b) is completed , hydrocarbon washings at temperatures ranging from 60 to 80°C can be carried out until the supernatant mother liquor has Cl and Ti concentrations of less than 10 mmol/1. As explained the solid obtained at the end of the washing step (c) has a Cl/Ti molar ratio of at least 2.5, preferably at least 3 and more preferably ranging from 3 to 5. The solid obtained has the following typical composition: Mg:Ti:Cl= 1: (0.8-1.5): (3.2-4.2).

In certain more preferred embodiements, it proved advantageous to carry out a further stage (d), in which the obtained solid is contacted with an aluminum alkyl halide compound in order to obtain a final solid catalyst component in which the Cl/Ti molar ratio is increased with respect to that of the solid before step (d)..

The alkylaluminum chloride is preferably selected from the dialkylaluminum monochlorides of the formula $R_2^3AlCl$ or the alkylaluminum sesquichlorides of the formula $R_3^3Al_2Cl_3$ in which $R^3$ can be identical or different alkyl radicals having 1 to 16 carbon atoms. The following may be mentioned as examples: $(C_2H_5)_2AlCl$, $(isobutyl)_2AlCl$ and $(C_2H_5)_3Al_2Cl_3$, (ethylaluminum sesquichloride), this latter being preferred. The reaction can be carried out in a stirred vessel at a temperature of from -0°C to 150°C, preferably from 30°C to 100°C for a time ranging from 0.5 to 5 hours.

The aluminum alkylchloride compound is used in amounts such that the Al/Ti molar ratio (calculated with reference to the Ti content of the solid catalyst component as obtained by the previous step) is from 0.05 to 1, preferably from 0.1 to 0.5.

As explained, this latter reaction generates a final solid catalyst component in which the Cl/Ti molar ratio is increased and generally being at least 3 most preferably higher than 3.5.

By effect of this latter step (d) a certain extent of the titanium atoms may be reduced from oxidation state $Ti^{+4}$ to oxidation state $Ti^{+III}$.

The so obtained catalyst component is used together with an organo aluminum compound (B) in the ethylene polymerization.

The organoaluminum compound (B) is preferably selected from the trialkyl aluminum compounds such as for example trimethylaluminum (TMA), triethylaluminum (TEAL), triisobutylaluminum (TIBA), tri-n-butylaluminum, tri-n-hexylaluminum, tri-n-octylaluminum, triisoprenylaluminum. Also alkylaluminum halides and in particular alkylaluminum chlorides such as diethylaluminum chloride (DEAC), diisobutylalumunum chloride, Al-sesquichloride and dimethylaluminum chloride (DMAC) can be used in mixture with said trialuminum alkyls. Use of TEAL and TIBA is preferred.

In addition to the above mentioned characteristics the solid catalyst component (a) may show a porosity $P_F$ determined with the mercury method higher than 0.40 cm$^3$/g and more preferably higher than 0.50 cm$^3$/g usually in the range 0.50-0.80 cm$^3$/g. The total porosity $P_T$ can be in the range of 0.50-1.50 cm$^3$/g, particularly in the range of from 0.60 and 1.20 cm$^3$/g, and the difference ($P_T$-$P_F$) can be higher than 0.10 preferably in the range from 0.15-0.50. The surface area measured by the BET method is preferably lower than 80 and in particular comprised between 10 and 70 m$^2$/g. The porosity as measured by the BET method is generally comprised between 0.10 and 0.50, preferably from 0.10 to 0.40 cm$^3$/g. In fact, small average particle size, such as less than 30μm, preferably ranging from 7 to 15 μm, are particularly suited for slurry polymerization in an inert medium, which can be carried out continuously in stirred tank reactors or in loop reactors. $d_{50}$ (mean particle diameter) is determined in accordance with DIN 53477 and DIN66144.

The so formed catalyst system can be used directly in the main polymerization process or alternatively, it can be pre-polymerized beforehand.

The batch pre-polymerization of the catalyst of the invention with ethylene in order to produce an amount of polymer ranging from 0.5 to 20 g per gram of catalyst component is particularly preferred. The pre-polymerization step can be carried out at temperatures from 0 to 80°C, preferably from 5 to 70°C, in the liquid or gas phase. The pre-polymerization step can be performed in-line as a part of a continuous polymerization process or separately in a batch process.

The catalyst of the invention can be used in any kind of polymerization process both in liquid and gas-phase processes. Catalysts having small particle size, (less than 40μm) are particularly suited for slurry polymerization in an inert medium, which can be carried out continuously stirred tank reactor or in loop reactors. Catalysts having larger particle size are particularly suited for gas-phase polymerization processes which can be carried out in agitated or fluidized bed gas-phase reactors.

The following examples are given in order to further illustrate the present invention by way of example

## Experiments

The density [g/cm$^3$] was determined in accordance with ISO 1183.

The results for the elemental composition of the catalysts described reported in the examples were obtained by the following analytical methods:

Ti:        photometrically via the peroxide complex

Mg, Cl:   titrimetrically by customary methods

Melt Index:

Melt index (M.I.) are measured at 190°C following ASTM D-1238 over a load of:

2.16 Kg, MI E = $MI_{2.16.}$
21.6 Kg, MI F = $MI_{21.6.}$
5 Kg, MI P = $MI_5$

Elongational rheology measurement

The measurements were performed on a Physica MCR 301 parallel plate rheometer instrument from AntonPaar GmbH (Graz, Austria), equipped with the Sentmanant Elongational Rheology tool (SER). The measurements were performed at 150 °C, after an annealing time of 5 min at the measurement temperature. The measurements were repeated for different specimens of each sample at elongational rates varying between 0.01 s-1 and 10 s-1, typically at 0.01, 0.05, 0.1, 0.5, 1, 5, 10 s-1. For each measurement, the uniaxial elongational melt viscosity was recorded as a function of time.

The test specimens for measurement were prepared as follows: 2.2 g of the resin material were used to fill a moulding plate of 70x40x1mm. The plate was placed in a press and heated up to 200°C, for 1min, under a pressure of 20-30bar. After the temperature of 200°C was reached, the sample was pressed at 100 bar for 4min. After the end of the compression-time, the material was cooled down to room temperature and the plate was removed from the form. from the compressed 1 mm thick compressed polymer plate, rectangular films of 12x11x1 mm were cut off and used as specimens for measuring the elongational hardening.

GPC for determination of molecular weight parameters

The determination of the molar mass Mn, Mw (and peak molecular weight Mp, as needed) was carried out by high-temperature gel permeation chromatography using a method described in DIN 55672-1:1995-02 (=issue Februar 1995). The deviations according to the mentioned DIN standard are as follows: Solvent 1,2,4-trichlorobenzene (TCB), temperature of apparatus and solutions 145 °C and as concentration detector a PolymerChar (Valencia, Paterna 46980, Spain) IR-4 infrared detector, capable for use with TCB. A WATERS Alliance 2000 equipped with the following precolumn SHODEX UT-G and separation columns SHODEX UT 806 M (3x) and SHODEX UT 807 connected in series was used. The solvent was vacuum distilled under nitrogen and was stabilized with 0.025% by weight of 2,6-di-tert-butyl-4-methylphenol. The flow rate used was 1 ml/min, the injection was 400 μl and polymer concentration was in the range of 0.008 % < conc. < 0.05 % w/w. The molecular weight calibration was established by using monodisperse polystyrene (PS) standards from Polymer Laboratories (now Varian, Inc.,Essex Road, Church Stretton, Shropshire, SY6 6AX, UK) in the range from 580 g/mol up to 11600000 g/mol and additionally Hexadecane. The calibration curve was then adapted to Polyethylene (PE) by means of the Universal Calibration method (Benoit H., Rempp P. and Grubisic Z., J. Polymer Sci., Phys. Ed., 5, 753(1967)). The Mark-Houwing parameters used herefore were for PS: kPS= 0.000121 dL/g, aPS=0.706 and for PE kPE= 0.000406 dL/g, αPE =0.725, valid in TCB at 135 °C. Data recording, calibration and calculation was carried out using NTGPC_Control_V6.02.03 and NTGPC_V6.4.24 (hs GmbH, Hauptstraße 36, D-55437 Ober-Hilbersheim), respectively.

GPC-MALLS measurements for determination of Mz were carried out on a PL-GPC C210 instrument on high temperature GPC of Polyethylene under the following conditions: styrene-divinylbenzene column, 1,2,4-trichlorobenzene (TCB) as solvent, flow rate of 0.6 ml/min., at 135°C, with detection by multi-angle-laser light-scattering (MALLS) detector as described in the next section below in more detail.

GPC-MALLS analysis for determination of branching factor g(Mz)

The experimentally determined branching factor g which allows to determine long-chain branches at molecular weight Mz, was measured by Gel Permeation Chromatography (GPC) coupled with Multi-Angle Laser-Light Scattering (MALLS), as described in the following:

The parameter g is the ratio of the measured mean square radius of gyration to that of a linear polymer having the same molecular weight. It is a measure for the presence of long chain branches (LCB) as was shown by the theoretical considerations of Zimm and Stockmeyer (Zimm et al., J. Chem. Phys. 1949, 17, 1301-1314), though there is some mismatch between the experimentally measured branching factor g (sometimes written g', for distinction) and the theoretically deduced one, as described in Graessley, W, Acc. Chem. Res. 1977, 332-339. In the present context, the branching factor g(Mz) is the experimentally determined one.

Linear molecules show a g factor value of 1, while values less than 1 in theory indicate the presence of LCB. Values of g were calculated as a function of molecular weight, M, from the equation:

$$g(M) = <R_g^2>_{sample, M}/<R_g^2>_{linear\ ref., M}$$

where $<R_g^2>_M$ is the mean-square radius of gyration for the fraction of molecular weight M. The linear reference baseline is interally computed based on the theoretical value of the Zimm-Stockmeyer equation (Zimm et al., J. Chem. Phys. 1949, 17, 1301-1314) for a perfectly linear polymer. The radius of gyration (size of polymers at each fraction coming from GPC) was measured with a Laser (16-angle Wyatt green-laser): for each fraction eluted from the GPC, carried out as described above, the molecular weight M and the branching factor g were determined, in order to define g at a defined M.
A Polymer Laboratories (now Varian, Inc., Essex Road, Church Stretton, Shropshire, SY6 6AX,UK) type 210 high temperature GPC was used, with solvent 1,2,4-trichlorobenzene at 135 °C and at a flow rate of 0.6 mL min⁻¹ employing three Shodex UT 806 and one UT 807 columns. Polyethylene (PE) solutions with concentrations of 1 to 5 mg/10mL, depending on samples, were prepared at 150°C for 2-4 h before being transferred to the SEC injection vials sitting in a carousel heated at 135°C. The polymer concentration was determined by infrared detection with a PolymerChar IR4 detector as in section b.1 above and the light scattering was measured with a Wyatt Dawn EOS multi angle MALLS detector (Wyatt Technology, Santa Barbara, California/U.S.A.). A laser source of 120mW of wavelength 658nm was used. The specific index of refraction was taken as 0.104 ml/g. Data evaluation was done with ASTRA 4.7.3 and CORONA 1.4 software (Wyatt, supra). The absolute molecular weight M and radius of gyration $<R_g^2>$ where established by Debye-type extrapolation at each elution volume by means of the afore mentioned software. The ratio g(M) at a given molecular weight M was then calculated from the radius of gyration of the sample to be tested and the radius of the linear reference at the same molecular weight. In the present context, the branching factor g(Mz) means g being determined at M=Mz.

**Example 1 (according to the invention)**

a) Preparation of the catalyst component A:

A suspension of 4.0kg (=35mol) of commercial available Mg(OC2H5)$_2$ in 25 dm³ of diesel oil having a boiling range from 140 to 170°C (hydrogenated petroleum fraction) have been treated in a high speed disperser (Krupp Supraton™ type S200 ) at 120°C for a period of 12 hours thus forming a gel-like dispersion. This Mg(OC2H5)$_2$-dispersion was transferred to a 130 dm³ reactor equipped with an impeller stirrer and baffles and which already contained 19 dm³ of dieseloil. After rinsing with 5 dm³ of dieseloil 7.6 dm³ (= 70 mol) of TiCl$_4$, diluted to 10 dm³ with dieseloil, were then added at 70°C over a period of 6 hours at a stirring speed of 80rpm. Afterwards the mixture was heated at T=120°C for 5 hours. 50 dm³ of diesel oil having a boiling range from 140 to 170°C (hydrogenated petroleum fraction) were then added and the mixture was cooled to T=65°C. After the solid had settled, the supernatant liquid phase (mother liquor) was then decanted off to a residual volume of 50 dm$^3$. 50 dm$^3$ of fresh diesel oil (hydrogenated petroleum fraction having a boiling range from 140 to 170°C) were subsequently introduced. After a stirring time of 20 minutes and a sedimentation period of ca. 90 minutes the supernatant liquid was again decanted off to a residual volume of 50 dm$^3$. This washing procedure was repeated until the titanium concentration of the mother liquor was less than 10 mmol/dm$^3$.

The suspension was then cooled to room temperature. The titanium content was 0.22 gcatalyst/mmolTi and the molar ratio of the solid (catalyst component A) was:

$$Mg{:}Ti{:}Cl \approx 1{:}1.34{:}3.81$$

Now, in a further step (corresponding to step d) in the description), the Catalyst component A was preactivated with Aluminium-sesquichloride (EASC) in a further 'washing' step. The molar Al/Ti-ratio was 0.25:1. The reaction was performed at 85°C for a time-period of 2 hours.

The titanium content was 0.22 gcatalyst/mmolTi and the molar ratio of the solid (catalyst component A) was:

$$Mg{:}Ti{:}Cl \approx 1{:}1.40{:}4.38.$$

Example 1.b: Jerry Cans - Polymerisation in cascaded slurry reactor train & Blow Moulding

The reactor system is a reactor train of three consecutive reactors R1,R2,R3, operated in a continous mode at the process settings as indicated, with continuous discharge from one reactor into the next one and continuous removal of product from the last reactor. The specific polymerisation activity of the catalyst prepared using the catalyst A from the preceding step 1.a in the reactor system was found to be 18 to 23 kg PE/g Catalyst. All reactors were operated as suspension reactors under stirring, comprising anhydrous hexane as suspending liquid for the catalyst composition. Monomers were fed as a gas stream comprising further precisely dosed amounts of hydrogen as a mass regulator as indicated.

The polymerization was carried out by adding first triethylaluminum as cocatalyst (= catalyst component B) and subsequently adding the preactivated catalyst component A prepared as described above in section 1.a, as a suspension diluted with diesel oil, into the reactor. The molar aluminum/titanium ratio was thus about 12.5:1.

Table I

| Catalyst total **24,7** [mmol/L], dosed at **12** [mmol/h] | | | | |
|---|---|---|---|---|
| Cocatalyst/alumorganic compound:**TEA**, **total 28,5** [mmol/L], dosed at **73** [mmol/h] active Al: **0,48** [mmol/L] | | | | |
| | *unit* | *R1* | *R2* | *R3* |
| Temperature | °C | 80 | 84 | 85 |
| Internal Pressure | bar | 4,7 | 3,9 | 4,9 |
| Ethylene C2 | kg/h | 40,8 | 20,0 | 19,2 |
| Ethylene C2-ratio | % | 51 | 25 | 24 |
| Hydrogen H2 | g/h | 17 | 8 | 5 |
| Butene C4 | g/h | 0 | 300 | 400 |
| Ethylene C2 | Vol. % | 45 | 64 | 78 |
| Hydrogen H2 | Vol. % | 38 | 22 | 12 |
| Butene C4 | Vol. % | 0 | 0,55 | 0,96 |
| pC2 | bar | 1,9 | 2,1 | 3,1 |
| H2/C2 | - | 0,83 | 0,34 | 0,14 |
| HLMI 21,6kg | g/10min | 16 | 8 | 5,5 |
| VZ | - | | | |
| density | g/cm3 | | | 0.955 |

The properties of the product thus obtained, from blow moulding of jerry cans (JC) of 800 g, extruded in 8 s in discontinuous mode at 210°C, of dimension , are displayed in table II below. Shear rate was at least >1000 $s^{-1}$, more likely >1500 $s^{-1}$. The FNCT, measured according to the method of Fleissner in Igepal solution (or an differently branded analogue of Igepal), was determined on compression moulded specimens of the polyethylene of exp. 1, not on wall sections taken from the moulded article.

Table II

|  | Target | Comp. example : Exp.1 of EP-122810 | Exp. 1 |
|---|---|---|---|
| Ethylene Split [%] | - | 35/50/15 | 50/26/24 |
| MFR 21,6 kg [g/10'] | 3.5 - 4.5 | 4,5 | 4,2 |
| Density [g/cc] |  | 0,956 | 0,955 |
| Swell Ratio [%] | 180 $\pm$ 15 | 192 | 182 |
| FNCT 4 MPa/80°C [h] | >4 | 10 | 4 |
| Atn -30°C [kJ/m$^2$] | $\geq$ 140 | 134 | 168 |
| Shrinkage Prediction | Cr-like | too high | Very good |
| Surface Smoothness of JC (visually) | - | poor | good |

Without wanting to be restricted by theory, it may be pointed out that the catalyst of the invention was found to provide for increased long-chain branching, as compared to the products obtained by the Ziegler catalyst from the prior art described in EP-1228101. Nevertheless, using a different Ziegler catalyst also providing for extremely high LCB contents did not result in equally well performing product in terms of surface smoothness, low gel content, acceptable FNCT and in particular in terms of shrinkage behaviour (data not shown). Excellent dimensional stability plus eventually superior die swell, allowing of better control of even wall thickness and contributing this way further to dimensional stability, are a unique features of the product of the invention, employing the catalyst of the invention. The product of the invention allows of good processing, as evidenced by the HLMI and a good wall thickness distribution. The FNCT values are not superior as compared to standard Ziegler products, but are obtainable in conjunction with afore said excellent dimensional conformity behaviour. For the time, it remains to be determined what property or properties distinguish the Ziegler catalyst of the invention.

It may further be pointed out that when using the same polyethylene for blow moulding standard 1-3 L test bottles used for an ESCR-like 'bottle burst test' practiced in many testing departments, the material of the present invention proved superior to the material of the comparative example, despite its lower FNCT value as given in table II above.

Addendum to Experiment 1 - Blow Moulding & Warpage Measurement Protocol: The analyzed jerry cans (JC) were produced at 210°C melt temperature on a Bekum machine BA 34.2 with grooved barrel extruder of 80 mm diameter and 20 D in length without breaker plate and sieve. The Bekum machine further consists of a side fed die head AKZ4 with an accumulator head for discontinuous mode, which can be switched on or off as needed. Die and mandrel have radii of 130 and 128 mm, respectively. The mould used was a C 17 mould, which is used for jerry cans of 20 1 volume (see drawing in Fig.1). All machine settings and machine parameters are given in Tab.2 below.

Blowing of the JC at 4 seconds push-out time took place in discontinuous mode by conveying the melt into the accumulator head at 70 kg/h (+/- 2,0 kg/h). The melt was accumulated for 56.0 s and was then extruded at 4 s push-out time at 215 bar push-out pressure to produce a 800 g (+/- 20 g) jerry can. The flash weight and the length of the pinch-off weld of the jerry can were recorded. The drum dimensions (height, length, width) were measured using a manual Vernier caliper of 0-1000 mm length with 200 mm measuring jaws and a precision of 0.1 mm. All machine parameters are given in Tab.2. Jerry Can Dimensions - the original mould dimensions were given as:

Height: 402.3 mm
Length: 302.9 mm
Width: 245.0 mm

The measured jerry can dimensions were then compared to the reference grade, which for all measurements was a unimodal chromium grade with HLMI 2. The aim was to produce a jerry can with dimensions similar to the reference grade since the former APC grade with Z501 catalyst had produced jerry cans, which had been too small in height but too big in length at the converter. The width of the final parts had not been a real issue and was acceptable.

**Example 2 (according to the invention): L-Ring Drum, industrial standard**

Ethylene was polymerized in a continuous process in three reactors arranged in series. An amount of 20.3 mmol/h of a Ziegler preactivated catalyst component A prepared as specified in experimental section 1.a above was fed into the first reactor *together* with 79 mmol/h triethylaluminum-alkyl (TEA) (with 0.4 mmol/l of active Al), as well as sufficient amounts of diluent (hexane), ethylene and hydrogen. The amount of ethylene (=50 kg/h) and the amount of hydrogen (= 24 g/h) in the first reactor were adjusted so that the percentage proportion of ethylene and of hydrogen measured in the gas phase of the first reactor were 37% by volume and 43% by volume, respectively, and the rest was a mix of nitrogen and vaporized diluent. The polymerization in the first reactor was carried out at 80°C.

The slurry from the first reactor was then transferred into a second reactor, in which the percentage proportion of hydrogen in the gas phase had been reduced to 8% by volume, and an amount of 0.12 kg/h of 1-butene was added to this reactor alongside with 27 kg/h of ethylene. The amount of hydrogen was reduced by way of intermediate $H_2$ depressurization.

72% by volume of ethylene, 8% by volume of hydrogen, and 0.39% by volume of 1-butene were measured in the gas phase of the second reactor, the rest being a mix of nitrogen and vaporized diluent. The polymerization in the second reactor was carried out at 85°C.

The slurry from the second reactor was then transferred to the third reactor, in which the percentage proportion of hydrogen in the gas phase was increased again to 21% by volume. An amount of 23 kg/h of ethylene was added to the third reactor. A percentage proportion of 66% by volume of ethylene, 21% by volume of hydrogen, and 0.34% by volume of 1-butene was measured in the gas phase of the third reactor, the rest being a mix of nitrogen and vaporized diluent. The polymerization in the third reactor was carried out at 85°C.

The long-term polymerization catalyst activity required for the cascaded process described above was provided by a specifically developed Ziegler catalyst as described in the WO/FR mentioned at the outset.

The diluent is removed from the polymer slurry leaving the third reactor, and the polymer is dried and then pelletized.

Table 1 below gives the viscosity numbers, quantitative proportions wA, wB, and wC of polymer A, B, and C for the polyethylene composition prepared and the properties of the final pelletized resin.

The viscosity numbers (VN) for each reactor are given as measured for each reactor (from powder taken out of R1, R2 and R3, respectively). But also the "true or actual" contribution of R2 and R3 are calculated. When measuring the powder taken out of R2 in fact we are measuring the combined reactors R1 and R2. The same holds for powder taken out of R3, where we are also in fact measuring the combined powders of R1, R2 and R3. Therefore the contribution of what R2 and R3 make "on their own" is calculated using the below equations:

"True" R2 contribution:

$$VN_{R2} = \left( w_A \left( \frac{VN_B - VN_A}{w_B} \right) \right) + VN_B$$

"True" R3 contribution:

$$VN_{R3} = \frac{(w_A + w_B + w_C)VN_C - (w_A * VN_A) - (w_B * VN_{R2})}{w_C}$$

with

$w_A$     = % wt proportion of reactor 1
$w_B$     = % wt proportion of reactor 2
$w_C$     = % wt proportion of reactor 3
$VN_A$     = viscosity number measured on powder taken out of reactor 1
$VN_B$     = viscosity number measured on powder taken out of reactor 2
$VN_C$     = viscosity number measured on powder taken out of reactor 3
$VN_{R2}$     = true viscosity number calculated (contribution) of reactor 2 alone
$VN_{R3}$     = true viscosity number calculated (contribution) of reactor 3 alone

Table III

| | Exp. 2 (LRD) | Comp. example : Exp.1 of EP 1 576 049 B1 |
|---|---|---|
| $W_A$ [% by weight] | 50 | 40 |
| $W_B$ [% by weight] | 27 | 38 |
| $W_C$ [% by weight] | 23 | 22 |
| VN1 [cm3/g] | 259 | 120 |
| VN2 [cm3/g] meas./ calc. | 382/608 | 260 / 407 |
| VN3 [cm3/g] meas./ calc. | 395 / 441 | 540 / 1533 |
| MFR 21,6 kg [g/10'] | 2,9 | 2,6 |
| Density [g/cc] | 0,954 | 0,953 |
| Swell Ratio [%] | 151 | 200 |
| FNCT 4 MPa/80°C [h] | 4 | 8,5 |
| Atn -30°C [kJ/m2] | 171 | 260 |
| Shrinkage | Very good | bad |
| Surface Smoothness of JC (visually) | Very good | poor |

Even though the swell ratio, FNCT and impact strength of LRD example 1 are much lower than for the comparative sample, no issues were reported by the customers regarding processability or approval of mechanical tests.

**Claims**

1.  A blow molded article selected from a canister, jerry can, cask, tank, drum or barrel, made from or comprising a trimodal polyethylene having a density of from 0.950 to 0.958 g/cm$^3$, preferably of from 0.952 to 0.956 g/cm$^3$, produced by polymerisation with a Ziegler catalyst, wherein the canister and jerry can are of 15 to 60 L volume and are made from or comprise the said trimodal polyethylene with a melt index (HLMI) according to ASTM D-1238, at 190°C and 21.6 kg, in the range of from 4 to 7 g/10 min and a dimensionless Hostalene Index (HLCBI) value of from 7 to 10, and the cask, tank, drum and barrel are of 90 to 150 L volume and are made from or comprise the said trimodal polyethylene with a melt index HLMI in the range of from 2.5 to 5.5 g/10 min and a HLCBI value of from 9.5 to 14.5.

2.  A blow molded article according to claim 1, wherein the polyethylene consists essentially of three polymeric weight fractions A,B,C, and wherein low molecular weight fraction A is a homopolymer and medium and high molecular weight fractions B and C, respectively, are copolymers of ethylene and 1-butene as the comonomer, and the polyethylene consists essentially of from 50 to 60 % (w/w) of said homopolymer A, of from 22 to 28% (w/w) of said copolymer B, of from 18 to 24% (w/w) of said copolymer C, and of from 0 to 5% (w/w) of non-polymeric additives and/or polymeric lubricants, based on the total weight of the polymer, and wherein the polyethylene is obtained by stepwise polymerisation in the presence of a solid Ziegler catalyst component, and preferably in the further presence of trialkylaluminum as a cocatalyst component, which solid catalyst is the product of a process comprising (a) reacting a magnesium alcoholate of formula Mg(OR$_1$)(OR$_2$) compound, in which R$_1$ and R$_2$ are identical or different and are each an alkyl radical having 1 to 10 carbon atoms, with titanium tetrachloride carried out in a hydrocarbon at a temperature of 50-100°C, (b) subjecting the reaction mixture obtained in (a) to a heat treatment at a temperature of 110°C to 200°C for a time ranging from 3 to 25 hours (c) isolating and washing with a hydrocarbon the solid obtained in (b), said solid catalyst component having a Cl/Ti molar ratio higher than 2,5.

3.  The blow molded article of claim 2, wherein the polyethylene is obtained by stepwise polymerisation carried out in three reactor steps whereof at least the first two reactor steps are carried out in suspension and wherein the last reactor step may be carried out in a gas phase or suspension reactor.

4.  The blow molded article of claim 1, wherein the polyethylene has a dimensionless ratio of HLMI:MI$_5$ of from 16 to 23, wherein HLMI is the melt index according to ASTM D-1238 , at 190°C and 21.6 kg, and wherein MI5 is the melt index according to ASTM D-1238 , at 190°C and 5 kg.

5. The blow molded article of claim 2, wherein said non-polymeric additives are selected from the group consisting of colorants, antioxidants/stabilizers including inorganic or carbonic acids or acid anhydrides and non-polymeric lubricants.

6. The blow molded article of claim 2, wherein said polymeric additive is a fluoropolymer lubricant or polybutene-1.

**Patentansprüche**

1. Blasgeformter Gegenstand ausgewählt aus einem Gefäß, einem Kanister, einem Fass, einem Tank, einer Trommel oder einer Tonne, hergestellt aus trimodalem Polyethylen mit einer Dichte von 0,950 bis 0,958 g/cm$^3$, vorzugsweise von 0,952 bis 0,956 g/cm$^3$, oder dieses umfassend, welches durch Polymerisation mit einem Ziegler-Katalysator produziert worden ist, wobei das Gefäß und der Kanister ein Volumen von 15 bis 60 L aufweisen und aus dem trimodalen Polyethylen hergestellt sind oder dieses umfassen, welches einen Schmelzindex (HLMI) gemäß ASTM D-1238 bei 190 °C und 21,6 kg im Bereich von 4 bis 7 g/10 min und einen dimensionslosen Wert des Hostalen-Index (HLCBI) von 7 bis 10 aufweist, und das Fass, der Tank, die Trommel und die Tonne ein Volumen von 90 bis 150 L aufweisen und aus dem trimodalen Polyethylen mit einem Schmelzindex HLMI im Bereich von 2,5 bis 5,5 g/10 min und einem HLCBI-Wert von 9,5 bis 14,5 hergestellt sind oder dieses umfassen.

2. Blasgeformter Gegenstand nach Anspruch 1, wobei das Polyethylen im Wesentlichen aus drei polymeren Gewichtsfraktionen A, B, C besteht, und wobei die Fraktion A mit niedrigem Molekulargewicht ein Homopolymer ist, und die Fraktionen B und C mit mittlerem beziehungsweise hohem Molekulargewicht Copolymere von Ethylen und 1-Buten als Comonomer sind, und das Polyethylen im Wesentlichen aus 50 bis 60 % (Gew./Gew.) des Homopolymers A, von 22 bis 28 % (Gew./Gew.) des Copolymers B, von 18 bis 24 % (Gew./Gew.) des Copolymers C und 0 bis 5 % (Gew./Gew.) an nichtpolymeren Additiven und/oder polymeren Schmierstoffen besteht, bezogen auf das Gesamtgewicht des Polymers, und wobei das Polyethylen durch stufenweise Polymerisation in Anwesenheit einer festen Ziegler-Katalysatorkomponente und vorzugsweise in weiterer Anwesenheit von Trialkylaluminium als Cokatalysatorkomponente erhalten wird, wobei der feste Katalysator ein Produkt eines Verfahrens ist, umfassend (a) Umsetzung einer Magnesiumalkoholatverbindung der Formel $Mg(OR_1)(OR_2)$, in der $R_1$ und $R_2$ gleich oder verschieden und jeweils ein Alkylrest mit 1 bis 10 Kohlenstoffatomen sind, mit Titantetrachlorid, die in einem Kohlenwasserstoff bei einer Temperatur von 50-100 °C durchgeführt wird, (b) Unterziehen der in (a) erhaltenen Reaktionsmischung einer Wärmebehandlung bei einer Temperatur von 110 °C bis 200 °C für eine Zeit im Bereich von 3 bis 25 Stunden, (c) Isolieren des in (b) erhaltenen Feststoffs und Waschen desselben mit einem Kohlenwasserstoff, wobei die feste Katalysatorkomponente ein Molverhältnis von Cl/Ti größer als 2,5 aufweist.

3. Blasgeformter Gegenstand nach Anspruch 2, wobei das Polyethylen durch stufenweise Polymerisation erhalten wird, die in drei Reaktorstufen durchgeführt wird, wobei mindestens die ersten beiden Reaktorstufen in Suspension durchgeführt werden, und wobei die letzte Reaktorstufe in einem Gasphasen- oder Suspensionsreaktor durchgeführt werden kann.

4. Blasgeformter Gegenstand nach Anspruch 1, wobei das Polyethylen ein dimensionsloses Verhältnis von HLMI:MI$_5$ von 16 bis 23 aufweist, wobei HLMI der Schmelzindex gemäß ASTM D-1238 bei 190 °C und 21,6 kg ist, und wobei MI$_5$ der Schmelzindex gemäß ASTM D-1238 bei 190 °C und 5 kg ist.

5. Blasgeformter Gegenstand nach Anspruch 2, wobei die nichtpolymeren Additive ausgewählt sind aus der Gruppe bestehend aus Färbungsmitteln, Antioxidantien/Stabilisatoren einschließlich anorganischen oder Carbonsäuren oder Säureanhydriden und nichtpolymeren Schmierstoffen.

6. Blasgeformter Gegenstand nach Anspruch 2, wobei das polymere Additiv ein Fluorpolymerschmierstoff oder Polybuten-1 ist.

**Revendications**

1. Objet moulé par soufflage choisi parmi une boîte, un bidon, un fût, un réservoir, un tambour ou un tonneau, fabriqué à partir de ou comprenant un polyéthylène trimodal présentant une densité de 0,950 à 0,958 g/cm$^3$, de préférence de 0,952 à 0,956 g/cm$^3$, produit par polymérisation avec un catalyseur de type Ziegler, la boîte et le bidon étant d'un volume de 15 à 60 1 et étant fabriqués à partir dudit ou comprenant ledit polyéthylène trimodal présentant un indice de fluidité à chaud (HLMI) selon la norme ASTM D-1238, à 190°C et à 21,6 kg, dans la plage de 4 à 7 g/10 min et présentant une valeur de l'indice d'hostalène sans dimension (HLCBI) de 7 à 10, et le fût, le réservoir, le tambour et le tonneau étant d'un volume de 90 à 150 1 et étant fabriqués à partir dudit ou comprenant ledit polyéthylène trimodal présentant un indice de fluidité à chaud HLMI dans la plage de 2,5 à 5,5 g/10 min et une valeur HLCBI de 9,5 à 14,5.

2. Objet moulé par soufflage selon la revendication 1, le polyéthylène étant essentiellement constitué par trois fractions pondérales polymères A, B, C et la fraction A de bas poids moléculaire étant un homopolymère et les fractions B et C, respectivement de poids moléculaire moyen et élevé, étant des copolymères d'éthylène et de 1-butène comme comonomère, et le polyéthylène étant essentiellement constitué par 50 à 60% (P/P) dudit homopolymère A, par 22 à 28% (P/P) dudit copolymère B, par 18 à 24% (P/P) dudit copolymère C et par 0 à 5% (P/P) d'additifs non polymères et/ou de lubrifiants polymères, sur base du poids total du polymère, et le polyéthylène étant obtenu par une polymérisation par étapes en présence d'un constituant catalytique solide de type Ziegler et de préférence en présence, en plus, de trialkylaluminium comme constituant cocatalytique, lequel catalyseur solide étant le produit d'un procédé consistant à (a) faire réagir un alcoolate de magnésium de formule Mg(OR$_1$) (OR$_2$), dans laquelle R$_1$ et R$_2$ sont identiques ou différents et représentent, chacun, un radical alkyle comprenant 1 à 10 atomes de carbone, avec du tétrachlorure de titane dans un hydrocarbure à une température de 50-100°C, (b) soumettre le mélange réactionnel obtenu dans (a) à un traitement thermique à une température de 110°C à 200°C pendant une période de temps allant de 3 à 25 heures, (c) isoler et laver par un hydrocarbure le solide obtenu dans (b), ledit constituant catalytique solide présentant un rapport molaire C1/Ti supérieur à 2,5.

3. Objet moulé par soufflage selon la revendication 2, le polyéthylène étant obtenu par une polymérisation par étapes réalisée en trois étapes de réacteur dont au moins les deux premières étapes de réacteur sont réalisées en suspension et la dernière étape de réacteur pouvant être réalisée en phase gazeuse ou dans un réacteur à suspension.

4. Objet moulé par soufflage selon la revendication 1, le polyéthylène présentant un rapport sans dimension de HLMI:MI$_5$ de 16 à 23, HLMI étant l'indice de fluidité à chaud selon la norme ASTM D-1238, à 190°C et à 21,6 kg, et MI$_5$ étant l'indice de fluidité selon la norme ASTM D-1238, à 190°C et à 5 kg.

5. Objet moulé par soufflage selon la revendication 2, lesdits additifs non polymères étant choisis dans le groupe constitué par les colorants, les antioxydants/stabilisants comprenant les acides inorganiques ou carboxyliques ou les anhydrides d'acide et les lubrifiants non polymères.

6. Objet moulé par soufflage selon la revendication 2, ledit additif polymère étant un lubrifiant de type fluoropolymère ou le polybutène-1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1228101 A
- EP 122810 A
- EP 1576049 B1

**Non-patent literature cited in the description**

- Rheology Principles. **MACKOSKO C.W.** Measurements and Applications. Wiley-VCH, 1994
- **BENOIT H. ; REMPP P. ; GRUBISIC Z.** *J. Polymer Sci., Phys. Ed.,* 1967, vol. 5, 753
- **ZIMM et al.** *J. Chem. Phys.,* 1949, vol. 17, 1301-1314
- **GRAESSLEY, W.** *Acc. Chem. Res.,* 1977, 332-339